# EUROPÄISCHE PATENTANMELDUNG

(11) **EP 1 158 753 A2**
(43) Veröffentlichungstag der Anmeldung: **28.11.2001**
(21) Anmeldenummer: 01112554.9
(22) Anmeldetag: 23.05.2001
(51) Int. Cl.: H04M 1/725, H04Q 7/32

(54) **Vorrichtung zum Versenden und Empfangen von Nachrichten**

(30) Priorität: 25.05.2000 DE 20009413 U; 30.01.2001 DE 20101773 U
(71) Anmelder: Firma Helicom Entwicklungsgesellschaft für Telekommunikation und Medientechnik MBH, 48291 Telgte (DE)
(72) Erfinder: Kemper, Martin, Dr., 48167 Münster (DE)
(74) Vertreter: Habbel, Ludwig (Lutz), Dipl.-Ing.

(57) **Zusammenfassung**

Bei einer Vorrichtung zum Versenden und Empfangen von alphanumerischen, drahtlos übertragbaren Nachrichten,
mit einer Tastatur,
und mit einem optischen Anzeigenfeld,
schlägt die Erfindung vor,
eine elektronische Schaltung, die nach dem Empfang einer derartigen Nachricht bestimmte Funktionen der Vorrichtung sperrt oder aktiviert, indem
entweder
die elektronische Schaltung als Lese-Sperrschaltung ausgestaltet ist, welche während der Darstellung einer empfangenen Nachricht auf dem Anzeigenfeld andere Funktionen der Vorrichtung sperrt, während sie die Funktion einer Bestätigungsschaltung freigibt,
wobei die Bestätigungsschaltung nach der Eingabe des Bestätigungssignals das Aussenden einer Bestätigungsmeldung an den Absender der Nachricht auslöst,
oder
indem die elektronische Schaltung Empfang einer Alarminformation eine eigene Klingel oder die Klingel der Vorrichtung zu einem Dauersignal ansteuert,
oder
indem die elektronische Schaltung Informationen empfängt, welche die in einem Modembetrieb arbeitende Vorrichtung an die Schaltung übermittelt, wobei die elektronische Schaltung diese Informationen über eine Datenschnittstelle im Datenformat einer SMS-Textmeldung zur Darstellung auf dem optischen Anzeigenfeld ausgibt.

## Beschreibung

Die Erfindung betrifft eine Vorrichtung nach dem Oberbegriff des Anspruches 1.

Derartige Vorrichtungen sind beispielsweise als Funkpager aus der Praxis bekannt. Die Eingabe der Nachricht erfolgt mündlich gegenüber einem Mitarbeiter einer Zentrale, der die mündliche Nachricht in alphanumerische Zeichen umsetzt und an die gewünschte Anwahlnummer versendet. Diese Möglichkeit, Nachrichten zu versenden, ist vergleichsweise teuer aufgrund der Personalkosten.

Gattungsgemäße Vorrichtungen sind weiterhin beispielsweise als Funktelefone bekannt. Mit ihnen können Textnachrichten im Rahmen des als SMS bezeichneten "short message service" versendet werden. Dieses Verfahren ist preiswert, da die Eingabe des alphanumerischen Textes durch den Benutzer selbst erfolgt, jedoch ist diese Eingabe durch eine komplette alphanumerische Tastatur vergleichsweise kompliziert, insbesondere da jeder Taste mehrere Buchstaben zugeordnet sind.

Beiden gattungsgemäßen Vorrichtungen ist gemeinsam, daß der Absender zwar darüber informiert werden kann, daß seine Nachricht beim Empfänger eingetroffen ist, also rein technisch von der Vorrichtung des Empfängers empfangen wurde. Der Absender hat jedoch keine Information darüber, ob seine Nachricht tatsächlich vom Empfänger gelesen wurde. Insbesondere für eine professionell genutzte Nachrichtenübermittlung ergibt sich der somit Nachteil einer gewissen Unsicherheit, was den Kommunikationsfluß angeht. Weiterhin sind Mobiltelefone bekannt beispielsweise für GSM-Netze, wobei diese Mobiltelefone mittels unterschiedlicher Verfahren Informationen empfangen können. Alphanummerische Informationen können dabei im SMS-Verfahren (short message service) übertragen werden. Dieses Verfahren erlaubt es, Textnachrichten gezielt an bestimmte Geräte zu senden. Nachteilig bei diesem Verfahren ist jedoch, dass die Handhabung der einzelnen Telefone eine umständliche Menüführung für das Empfangen und für das Aussenden der Texte erfordert. Ein weiterer Nachteil besteht darin, dass das Mobiltelefon entweder nur kurz klingelt, um kurz auf die Textbotschaft aufmerksam zu machen oder dass alternativ ein regulärer Klingelrhytmus ausgelöst wird, der jedoch ebenfalls nur über eine vergleichsweise kurze Zeitdauer zu einem Klingelsignal führt. Insbesondere bei wichtigen Textnachrichten ist daher nicht ausgeschlossen, dass derartige Nachrichten zwar vom Mobiltelefon empfangen, vom Benutzer des Mobiltelefons jedoch nicht gelesen werden, weil dieser auf die Nachricht nicht aufmerksam wird.

Bei den Mobiltelefonen ist es bekannt, eine Bestätigungsmeldung durch den Benutzer an den Absender der Textnachricht zurückzusenden. Auch dies ist üblicherweise mit einer vergleichsweisen komplizierten Menüführung verbunden und zudem kann auf diese Weise zwar sichergestellt werden, dass der Absender die sichere Information erhält, der Benutzer habe die Textmeldung gelesen; einen kalkulierbaren Zeitrahmen dafür, wann der Benutzer die Textnachricht lesen wird, hat der Absender jedoch beim Absenden der Nachricht nicht.

Ein weiterer Nachteil der Mobiltelefone ist, dass spezielle Nachrichten, beispielsweise Nachrichten von besonderer Wichtigkeit, inhaltlich nicht automatisch ausgewertet werden können und daher auch keine spezifischen Reaktionen oder Hinweise des Telefons abhängig von dem Inhalt der Nachricht an den Benutzer des Telefons abgegeben werden können.

Der Erfindung liegt die Aufgabe zugrunde, eine gattungsgemäße Vorrichtung dahingehend zu verbessern, daß eine für den Absender sichere Übermittlung von schriftlichen Nachrichten ermöglicht wird.

Diese Aufgabe wird durch eine Vorrichtung mit den Merkmalen des Anspruches 1 gelöst.

Die Erfindung schlägt mit anderen Worten etweder technische oder logische, den Bedienungsablauf betreffende Maßnahmen vor, um die Übersendung der Nachricht sicherer zu machen:
■ entweder erhält der Absender eine Bestätigung, daß die Nachricht gelesen wurde; für den Empfänger ist die Vorrichtung nach dem Lesen einer Nachricht erst dann wieder vollumfänglich nutzbar, wenn er ein Bestätigungssignal zum Aussenden der Bestätigung gegeben hat,
■ oder es wird nach Eingang der Mitteilung am Empfangsgerät sichergestellt, dass dieses besonders auffällig signalisiert, sodass die Wahrscheinlichkeit verbessert wird, dass der Benutzer der Vorrichtung auch tatsächlich und möglichst schnell auf das Vorliegen einer neuen Mitteilung hingewiesen wird,
■ oder es wird im Gegensatz zu den beiden vorhergehenden Vorschlägen, die eine Beeinflussung des Bedienungsablaufes durch den Benutzer bewirken sollen, eine rein technische Verbesserung der Übertragungssicherheit vorgeschlagen, indem die Nachricht nicht im SMS-Format übertragen wird, sondern in einem reinen Datenformat, während es sich bei der SMS-Übertragung um eine "point-to-multi-point" -Übertragung handelt, bei der die Information abgesendet wird. Ohne den Aufbau einer direkten Verbindung zwischen Absender und Empfänger handelt es sich bei der Datenübertragung, wie sie aus dem Fax bzw. Modembetrieb bekannt ist, um eine "point-to-point"-Verbindung, bei der das Sendegerät und das Empfangsgerät einen unmittelbaren Datenaustausch bidirektional betreiben, beispielsweise mit Form des aus der Telefaxübermittlung bekannten "hand-shake", sodass sichergestellt ist, dass die vom Sendegerät ausgesendeten Informationen auch tatsächlich vom Empfangsgerät empfangen worden sind.

Das Bestätigungssignal kann beispielsweise mittels Spracheingabe oder durch Drücken einer entsprechenden Bestätigungstaste gegeben werden. Das Auslösen des Bestätigungssignals setzt für den Empfänger der Nachricht voraus, daß er die Nachricht zunächst gelesen hat. Die beispielhaft erwähnte Bestätigungstaste kann daher deaktiviert sein, solange keine neu eingetroffene Nachricht auf dem Anzeigenfeld dargestellt wird, also auch während der Anzeige älterer, bereits abgespeicherter Nachrichten, so daß nicht versehentlich Nachrichten bestätigt werden können, die vielleicht schon empfangen, aber noch nicht dargestellt worden sind.

Die Bestätigung wird nur an den Absender der momentan auf dem Angezeigenfeld dargestellten Nachricht abgesandt, so daß keine Bestätigungen an Absender herausgehen können, deren Nachrichten zwar schon von der Vorrichtung empfangen worden sind und die noch nicht gelesen wurden, die aber auch noch nicht auf dem Angezeigenfeld dargestellt worden sind.

Die Funktionsbeschränkung der Vorrichtung erfolgt während der Darstellung der Nachricht auf dem Anzeigenfeld durch eine sogenannte "Lese-Sperrschaltung", also eine Funktionssperre, die während des Lesens aktiviert ist. Dies kann beispielsweise in der Form erfolgen, daß die Nachricht erst dann vom Display verschwindet, wenn der Bestätigungsbefehl gegeben wurde. Ggf. können auch weitere Funktionsbeschränkungen vorgesehen sein wie die Deaktivierung von Tasten o. dgl..

Die "Lese-Sperrschaltung" sperrt also während des Lesens, das heißt während der Darstellung einer Nachricht auf dem Anzeigenfeld, andere Funktionen der Vorrichtung, während sie die Eingabe des Bestätigungssignals ermöglicht. Es können sämtliche andere Funktionen deaktiviert sein, es kann jedoch auch vorgesehen sein, eine oder wenige wichtige Funktionen aktiviert zu belassen, beispielsweise Notruffunktionen o. dgl.. Der Benutzer kann jedoch beispielsweise nicht telefonieren oder Nachrichten absenden, ohne vorher die gelesene Nachricht bestätigt zu haben, so daß ein Anreiz für den Benutzer geschaffen ist, gelesene Nachrichten möglichst bald zu bestätigen. Nach dem Lesen ist die Vorrichtung erst dann wieder vollumfänglich betriebsbereit, wenn das Bestätigungssignal gegeben wurde.

So ist die Nachrichtenübermittlung für den Absender genauso sicher wie auf dem herkömmlichen Postvertriebsweg ein Einschreiben mit Rückschein: Dem Absender wird nicht nur bestätigt, daß die Nachricht tatsächlich an den gewünschten Empfänger abgesendet worden ist, sondern auch, daß der Empfänger diese Nachricht erhalten hat.

Mit den vorgeschlagenen Vorrichtungen lassen sich beispielsweise Fahrzeugparks dirigieren und Einsätze koordinieren, da die Einsatzleitung eine Rückmeldung darüber erhält, ob und wann welche Nachricht von welchem Empfänger gelesen wurde. Macht beispielsweise ein Empfänger Pause, so erhält die Einsatzleitung keine Bestätigung. Sie kann nach einer gewissen Wartezeit dieselbe Nachricht an einen anderen Empfänger absenden und dies dem Erstempfänger mitteilen.

Vorteilhaft kann ein Nachrichtenspeicher vorgesehen sein, so daß für den Empfänger der Nachricht die Möglichkeit besteht, durch das Bestätigungssignal bzw. anschließend an das Bestätigungssignal die Nachricht entweder zu löschen oder in den Nachrichtenspeicher zu schreiben. Dieser Nachrichtenspeicher dient dem Empfänger beispielsweise zur späteren Überprüfung von Anweisungen, die in der Nachricht enthalten waren, aber auch aus Sicherheitsgründen zum Nachweis darüber, welche Nachrichten mit welchem Inhalt er tatsächlich erhalten hat.

Tatstaur und Anzeigenfeld können miteinander verschmelzen, beispielsweise durch Verwendung eines an sich bekannten, als "touch screen" bezeichneten Anzeigenfeldes. Vorteilhaft kann die Vorrichtung eine Schaltung aufweisen, welche ein den Nachrichten zuzuordnendes Zeitsignal erzeugt, so daß die Aktualität empfangener Nachrichten abschätzbar ist und die Reaktionszeiten auf empfangene Nachrichten nachvollziehbar sind.

Vorteilhaft kann ein als Adressbuch bezeichneter Speicher vorgesehen sein, in dem Empfänger und deren Anwahlnummern abgespeichert sind. Auf diese Weise wird das Verschicken der Nachrichten vereinfacht, da die Auswahl des Empfängers mit wenigen Tasten-Bedienschritten aus einem derartigen Adressverzeichnis erfolgen kann. Die Neueingabe von Empfängern kann beispielsweise über die erwähnte Spracherkennung Wort für Wort bzw. Buchstabe für Buchstabe und Ziffer für Ziffer erfolgen.

Vorteilhaft kann ein Speicher für unterschiedliche Funktionsabläufe vorgesehen sein, so daß die Vorrichtung umschaltbar und vielseitig nutzbar ist. So kann beispielsweise die Datenübertragung über unterschiedliche Kommunikationsnetze erfolgen, beispielsweise im Bereich eines Firmenfunksenders über dessen Funkkanäle, und außerhalb des Sendebereiches eines derartigen Firmenfunksenders beispielsweise über allgemein zugängliche Funknetze von Mobilfunkbetreibern. Die unterschiedlichen Funktionsabläufe können aber auch unterschiedliche Funktionsmenüs beinhalten, die den jeweiligen Tasten zugeordnet sind, so daß auch auf diese Weise die Vorrichtung für unterschiedliche Anwender oder unterschiedliche Anwendungsfälle entsprechend angepaßt eingestellt werden kann.

Vorteilhaft kann ein derartiger Speicher für unterschiedliche Funktionsabläufe überschreibbar ausgestaltet sein, wobei die Vorrichtung in diesem Fall vorteilhaft eine Datenschnittstelle aufweist, so daß die Geräte von außen mit den entsprechenden Informationen beschickt werden können.

In einem weiteren Schritt kann die Vorrichtung vorteilhaft dahingehend vereinfacht werden, daß lediglich wenige Tasten Verwendung finden. Damit verbunden ist die Möglichkeit, daß die Eingabe der alphanumerischen Zeichenkette nicht wie bei den gattungsgemäßen Telefonen direkt über die Tastatur erfolgt, sondern vielmehr mündlich, und daß sie nicht wie bei den gattungsgemäßen Funkpagern über einen Mitarbeiter einer Zentrale erfolgt, sondern kostengünstig dadurch, daß die gesprochene Mitteilung durch eine Spracherkennungsschaltung in die alphanumerischen Zeichen umgesetzt wird. Auf diese Weise ist die Eingabe der Nachricht für den Absender sowohl preisgünstig als auch einfach.

Die Spracherkennungsschaltung kann entweder in der Vorrichtung selbst verwirklicht sein oder zentral bei dem Betreiber eines Kommunikationsnetzes.

Beispielsweise kann jedes gesprochene Wort sofort alphanumerisch umgesetzt und auf dem Anzeigenfeld der Vorrichtung angezeigt werden. Falsch umgesetzte Wörter können durch Tastendruck verworfen und anschließend neu eingegeben oder ggf. buchstabiert werden. An Stelle der erwähnten Wörter ist dieses Eingabeverfahren auch für kleinere oder auch längere Zeichenketten anwendbar, z. B. für eine buchstabenweise oder satzweise oder für eine komplette Eingabe der Nachricht.

Gegebenfalls kann eine sogenannte "Empfangs-Sperrschaltung" vorgesehen sein, also eine Sperrschaltung, die durch den Empfang neuer Nachrichten aktiviert wird und die den Benutzer reizt, eine neu eingetroffene Nachricht möglichst bald zu lesen, so daß, verglichen mit einer Briefzustellung, eine Art Expresszustellung bewirkt wird. Vereinfacht kann die Empfangs-Sperr-schaltung darin bestehen, daß sie unmittelbar die Wiedergabe der neu empfangenen Nachricht selbst im Display auslöst, wodurch dann wiederum die Lese-Sperrschaltung aktiviert ist, bis die Nachricht gelesen und bestätigt ist. Da während dieser Zeit die Bestätigungsschaltung aktiviert ist, könnte ein versehentlich ausgelöstes Bestätigungssignal vorkommen, beispielsweise durch einen versehentlichen Tastendruck. Vorteilhaft kann daher vorgesehen sein, daß die Empfangs-Sperrschaltung zunächst nur einen Hinweis auf das Vorliegen neuer Nachrichten auslöst:

Bei Vorliegen einer neu empfangenen, noch nicht gelesenen Nachricht aktiviert die Empfangs-Sperrschaltung erstens eine Anzeige, welche den Benutzer über das Vorliegen der neuen Nachricht informiert. Diese Anzeige kann als Vibrationsalarm erfolgen, als akustisches Signal, als Hinweissymbol oder Hinweistext im Display, o. dgl..

Zweitens sperrt die Empfangs-Sperrschaltung zugleich andere Funktionen der Vorrichtung, während sie die Funktion zum Anzeigen bzw. Auslesen der Nachricht freigibt. So kann der Benutzer beispielsweise aus einer Liste, die mehrere neu eingetroffene, noch nicht gelesene Nachrichten enthält, eine nun anzuzeigende Nachricht auswählen und auf dem Anzeigenfeld darstellen lassen. Es können sämtliche andere Funktionen deaktiviert sein, es kann jedoch auch vorgesehen sein, eine oder wenige wichtige Funktionen aktiviert zu belassen, beispielsweise Notruffunktionen o. dgl.. Der Benutzer kann jedoch beispielsweise nicht telefonieren oder Nachrichten absenden, ohne vorher die neu empfangene Nachricht gelesen zu haben, so daß ein Anreiz für den Benutzer geschaffen ist, neu empfangene Nachrichten möglichst bald zu lesen.

Während und nach dem Lesen wiederum ist die Vorrichtung aufgrund der Lese-Sperrschaltung erst dann wieder vollumfänglich betriebsbereit, wenn das Bestätigungssignal gegeben wurde.

Vorteilhaft kann die Vorrichtung ein Mikrophon und einen Lautsprecher aufweisen sowie eine als Sprechschaltung bezeichnete elektronische Schaltung zum Aufbau einer Sprechverbindung. Auf diese Weise kann beispielsweise ein firmeninterner Rufdienst dahingehend vereinfacht werden, daß die angerufene Person nicht nur die Nachricht erhält, sie solle bei der Zentrale zurückrufen, sondern es besteht für diese angerufene Person auch zugleich die Möglichkeit, ohne ein Telefon aufsuchen zu müssen, über die Erfindungsgemäße Vorrichtung den Rückruf aufzubauen.

Dabei kann vorteilhaft vorgesehen sein, daß die Schaltung den Aufbau der Sprechverbindung nicht nur zu einer fest vorgegebenen Zentrale ermöglicht, sondern zu einer Anwahlnummer, welche in der alphanumerischen Nachricht enthalten ist. Eine derartige Nummer kann beispielsweise an einer bestimmten Stelle der Nachricht stehen oder durch bestimmte Symbole eingefaßt sein, so daß eine automatische Erkennung der Nummer möglich ist, z. B. durch eine in der Sprechschaltung verwirklichte Erkennungsschaltung. Zu der erkannten Nummer kann anschließend der Aufbau der Sprechverbindung erfolgen. Auf diese Weise wird die Funktion des Rufdienstes um die Möglichkeit erweitert, nicht nur eine Zentrale anzurufen, sondern beliebige Telefonnummern.

Die Vorrichtung kann eine Notruftaste aufweisen, so daß in Gefahr befindliche Personen, beispielsweise bestimmte Berufsgruppen, oder Senioren, od. dgl. diese Notruftaste drücken können, woraufhin ein festgelegter Nachrichtentext an eine ebenfalls vorher festgelegte Notrufnummer übermittelt wird. Eine automatische Ortung kann dadurch erfolgen, daß die Vorrichtung entweder ein satellitengestütztes Navigationsmodul, wie beispielsweise ein GPS-gestütztes Ortungsmodul enthält und die jeweiligen Standortdaten zusammen mit der Alarmmeldung aussendet, oder es kann eine sogenannte Zellortung durchgeführt werden, beispielsweise anhand der Zellen eines Funknetzes. So kann beispielsweise bei Benutzung des Funknetzes eines Mobilfunkbetreibers die Feldstärke zweier oder mehrerer benachbarter Verstärkerstationen dazu dienen, den momentanen Standort der Vorrichtung zu ermitteln.

Eine drahtgebundene oder auch drahtlose - beispielsweise mittels des "Bluetooth"-Funk-Übertragungsstandards- Übertragung von Sprach- und / oder Datensignalen von der Vorrichtung zu externen Peripheriegeräten kann vorgesehen sein, beispielsweise zu einem sogenannten Headset, wie es von Freisprecheinrichtungen bekannt ist.

Eine weitere Möglichkeit, eine sichere Übersendung der Textnachrichten zu ermöglichen besteht darin, nicht nur die Sicherheit zu erhöhen, dass die Textnachricht im Empfangsgerät ankommt, sondern sicherzustellen, dass der Empfänger die Nachricht auch tatsächlich aufnimmt also liest. Hierzu kann insbesondere vorgesehen sein, dass anstelle der üblichen entweder sehr kurzen oder zumindest vergleichsweise kurzen Klingelsignale Dauersignale verwendet werden, die auch bei kurzfristiger Ablenkung oder bei lauten Umgebungsgeräuschen nach einiger Zeit mit größter Wahrscheinlichkeit vom Benutzer des Telefons wahrgenommen werden. Hierzu kann preisgünstiger Weise ein handelsübliches Mobiltelefon Verwendung finden, wobei die zugeordnete elektrische Schaltung innerhalb eines separaten Gehäuses angeordnet ist. Bei diesem Gehäuse kann es sich insbesondere um eine Halterung handeln, die das Mobiltelefon mechanisch aufnimmt und welche die elektronische Schaltung enthält. Wobei diese Schaltung es erlaubt, über eine Schnittstelle zum Mobiltelefon Daten zu senden und zu empfangen.

Bei ist vorgesehen, die elektronische Schaltung in die Halterung zu integrieren, sodass ein einfacher mechanisch/elektronischer Adapter entsteht.

Weiterhin ist vorgesehen, die Schnittstelle drahtgebunden oder drahtlos auszuführen. Mittels dieser Datenkommunikation zwischen der Halterung einschließlich ihrer Elektronik einerseits und dem Mobiltelefon andererseits werden die im Telefon ankommenden SMS-Nachrichten abgefragt und in einem Speicher abgespeichert, welcher der elektronischen Schaltung zugeordnet bzw. Teil der elektronischen Schaltung ist, wobei die elektronische Schaltung weiterhin einen Microprozessor enthalten kann, welcher die abgespeicherten Nachrichten analysiert. Dabei kann vorgesehen sein, dass die elektronische Schaltung auf besondere Informationen innerhalb der Textmeldung reagiert und ihrerseits Aktionen auslöst, beispielsweise zur Steuerung des Mobiltelefons.

Ist in einer SMS-Meldung beispielsweise eine Alarminformation enthalten, so kann vorgesehen sein, dass die elektronische Schaltung über die Datenschnittstelle Informationen zum Mobiltelefon übergibt, die ein zeitlich unbegrenztes Klingelsignal im Mobiltelefon ansteuern bzw. über wiederholte Kommunikationsvorgänge ein dauerhaftes Klingelsignal ermöglichen, beispielsweise durch wiederholte Ansteuerung des Mobiltelefons wie bei einem eingehenden Telefonanruf.

Außer einer SMS-Übertragung kann auch vorgesehen sein, dass die Textinformation im sogenannten Fax-/Modembetrieb oder in alternativen Datenübertragungsverfahren wie GPRS oder UMTS übertragen wird, die im Folgenden unter dem Begriff des Modembetriebs zusammengefasst sind.

Dabei kann vorgesehen sein, dass die elektronische Schaltung der erfindungsgemäßen Vorrichtung in der Lage ist, eine Modemkommunikation zu unterstützen, also Daten auf diesem Wege zu empfangen, aber auch die Datenausgabe an das Mobiltelefon im SMS-Standart zu machen. Hierdurch kann beispielsweise eine besonders sichere Übertragung im Modembetrieb gewährleistet werden, während SMS-Meldungen nicht sicher zugestellt werden können. Die Übertragung der Information von der elektronischen Schaltung zum Mobiltelefon als SMS-Meldung widerum ermöglicht die einfache Darstellung der Textmeldung auf dem Display des Mobiltelefons.

Die vorgenannten Möglichkeiten sind unter dem Sammelbegriff der Datenkommunikation zwischen Mobiltelefon und elektronischer Schaltung zusammengefasst. Diese Datenkommunikation erfolgt vorzugsweise bidirektional und ist Träger der Informationen.

Rein beispielhaft soll die vorgenannte Anwendung verdeutlicht werden: In Servicebetrieben mit Außendienst kann es zu Situationen kommen, die einen sofortigen Einsatz eines externen Technikers bedingen. Hierbei ist es oft wichtig, einen bestimmten Techniker zu erreichen, der sich mit der problematischen Anlage besonders gut auskennt. Von der Einsatzzentrale aus erhält speziell dieser Techniker eine SMS-Meldung bzw. einen Modemanruf an die elektronische Schaltung, wobei diese Schaltung die Nachricht inhaltlich auswertet und als Alarmnachricht analysiert. Mittels der durch die Datenkommunikation übertragene Ansteuerungsbefehle der elektronischen Schaltung wird nun das Mobiltelefon in einen besonderen Modus geschaltet, sodass ein besonders lautes und zeitlich nicht begrenztes Klingelsignal des Mobiltelefons erzeugt wird. Auf diese Weise kann der Techniker auch bei längerer, zum Beispiel mehrminütiger Abwesenheit vom Ort des Telefons das Klingelsignal mit großer Wahrscheinlichkeit hören. Durch eine kleine Tastatur mit wenigen Tasten, die der elektronischen Schaltung zugeordnet sein kann und beispielsweise in dem zusätzlichen Gehäuse zusammen mit der elektronischen Schaltung vorgesehen ist, kann die Nachricht bestätigt werden, wobei die elektronische Schaltung eine Bestätigungsmeldung erzeugt, die mittels der Datenschnittstelle zum Modiltelefon übertragen wird, welches diese Bestätigung per SMS oder im Modembetrieb zur Zentrale überträgt. Mit diesem Vorgang ist sichergestellt und von der Zentrale überprüfbar, dass der Techniker die Nachricht erhalten und auch gelesen hat.

Während die Laufzeiten von SMS-Mitteilungen zwischen Absender und Empfänger zwischen 5 Sekunden und 3 Tagen dauern können, kann durch die Modemverbindung zum Telefongerät eine Zustellung der Textnachricht mit 100 %iger Sicherheit garantiert werden, sofern die Datenverbindung zum Telefon überhaupt zustande kommt.

Ein weiterer Anwendungsfall kann darin liegen, dass Feuerwehrleute alarmiert werden müssen. In diesem Fall versendet die Software der Leitstelle im Alarmfall zunächst SMS-Nachrichten und wartet auf die Bestätigungsmeldungen des Netzes, die durch die vorerwähnte Betätigung der "kleinen" Tastatur durch die benachrichtigten Feuerwehrleute ausgelöst werden. Treffen die Bestätigungsmeldungen nicht innerhalb eines vorgegebenen Zeitraumes von beispielsweise 30 oder 60 Sekunden ein, kann davon ausgegangen werden, dass entweder die Nachricht innerhalb des schlecht kalkulierbaren Zeitrahmens als SMS-Nachricht im Funknetz des Mobiltelefon-Betreibers unterwegs ist oder dass das gewünschte Empfangsgerät, also das gewünschte Mobiltelefon des Feuerwehrmannes, keine Funkverbindung hat oder ausgeschaltet ist. Im ersten Fall, dass nämlich die Nachricht im Funknetz unterwegs ist, kann eine nachgeschaltete Modemverbindung die Nachricht mit zuverlässiger Sicherheit zum Endgerät übertragen und eine 100 %ige Zustellsicherheit erreichen. Da die Zustellungsprobleme innerhalb eines FunkTelefonnetzes von Funkzelle zu Funkzelle unterschiedlich sein können und dementsprechend nicht kalkulierbar sind, können durch die Modemverbindung solche Fälle abgesichert werden, in denen Netzprobleme die Zustellung von SMS-Nachrichten gefährden.

Drei Ausführungsbeispiele der Erfindung werden anhand der Zeichnungen nachfolgend näher erläutert.

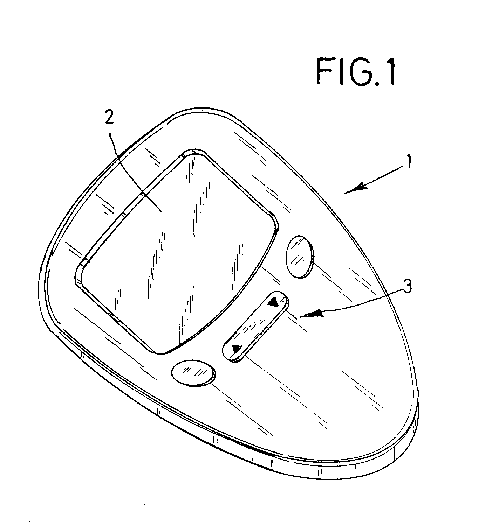

In Fig. 1 ist mit 1 allgemein eine Vorrichtung bezeichnet, die ein optisches Anzeigenfeld 2 aufweist sowie eine nur wenige Tasten umfassende Tastatur 3. Die beiden äußeren Tasten können fest vorgegebene oder je nach momentanem Betriebszustand wechselnde Funktionen aufweisen, wie beispielsweise "Bestätigen / Löschen / Ein */* Aus / Verbindungsaufbau */* Verbindungsabbruch" od. dgl.. Die mittlere, längliche Taste, wie durch die beiden eingezeichneten Pfeile angedeutet, dient dazu, durch ein Funktionsmenü oder eine Auswahlliste zu blättern.

Weiterhin kann die Vorrichtung 1 einen Lautsprecher aufweisen, beispielsweise in Form eines Piezosummers o. dgl. zur Signalisierung eingetroffener Nachrichten oder zur Bestätigung betätigter Tasten. Jedoch kann auch, beispielsweise auf der Rückseite der Vorrichtung 1, ein größerer Lautsprecher zur Sprachwiedergabe vorgesehen sein, wenn z. B. der Aufbau einer Sprechverbindung mit der Vorrichtung 1 möglich sein soll.

Weiterhin kann die Vorrichtung 1 eine nicht dargestellte Datenschnittstelle aufweisen, um Parameter der Vorrichtung überschreiben bzw. neu definieren zu können.

Weiterhin weist die Vorrichtung 1 ein nicht dargestelltes Mikrophon auf, welches die Spracheingabe zu einer Spracherkennungsschaltung und ggf. - falls vorgesehen - während einer Sprechverbindung ermöglicht.

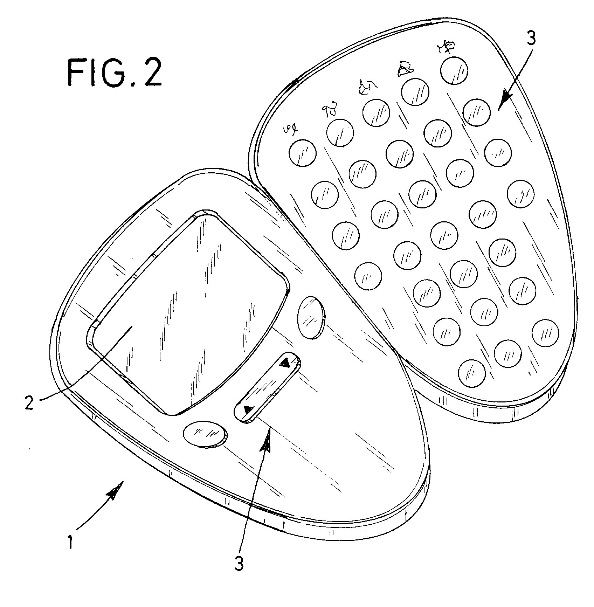

Fig. 2 zeigt eine Vorrichtung 1 ähnlich der in Fig. 1 dargestellten Vorrichtung 1. Das Gehäuse ist jedoch klappbar und weist eine zweigeteilte Tastatur 3 auf. Auf der Vorderseite befinden sich wenige Tasten, die beispielsweise die selben Funktionen aufweisen können wie die der Fig. 1. Auf der Rückseite der Vorrichtung 1 befindet sich der Rest der Tastatur 3, wobei dieser Rest beispielsweise zur Eingabe sämtlicher alphanumerischer Zeichen und ggf. von Sonderzeichen dienen kann, so daß eine Spracherkennungsschaltung nicht erforderlich ist.

Da dieser erwähnte Rest der Tastatur 3 auf der Außenfläche der Rückseite des Gehäuses angeordnet ist, ergibt sich auf einfache Weise die Möglichkeit, mittels der Tastatur 3 eingegebene Zeichenketten auf dem Anzeigenfeld zu überprüfen. Um eine unerwünschte Tastenbetätigung auszuschließen, kann vorgesehen sein, daß die auf der Rückseite des Gehäuses angeordneten Tasten deaktiviert sind, wenn das Gehäuse der Vorrichtung 1 zusammengeklappt ist.

Abweichend vom in Fig. 2 dargestellten klappbaren Ausführungsbeispiel kann eine vollständige alphanumerische Tastatur vorgesehen und auf andere Weise zugänglich gemacht oder gesperrt werden, beispielsweise durch anderweitig bewegliche, z. B. schwenkbare Gehäuseteile, oder durch versenkt bzw. anderweitig bewußt schlecht zugänglich angeordnete Ein- und Ausschalttasten o. dgl..

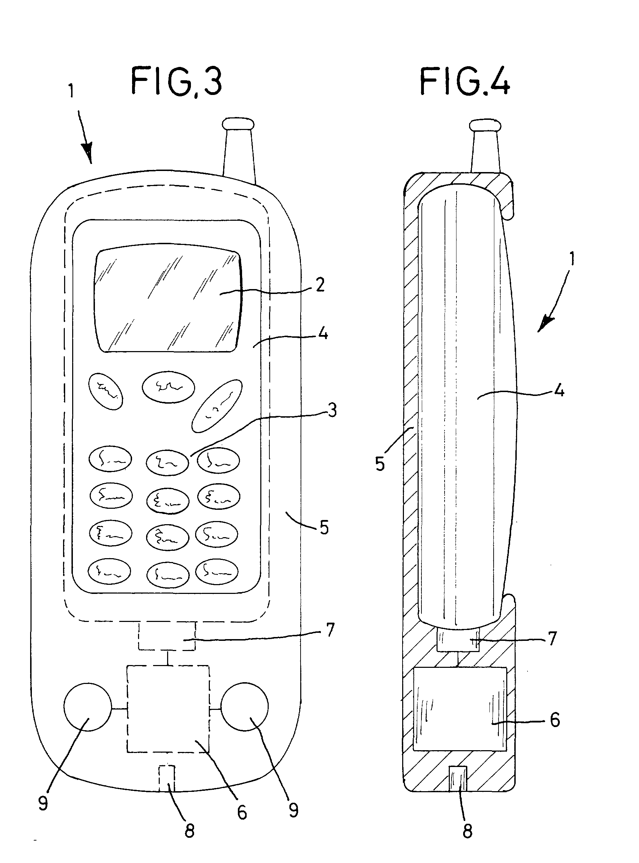

In Fig. 3 ist eine Vorrichtung 1 dargestellt, die aus einem Mobiltelefon 4 und einem separaten, das Mobiltelefon 4 umgebenden Gehäuse 5 besteht. Das Gehäuse 5 ist als Halterung für das Mobiltelefon 4 ausgestaltet, wie insbesondere aus Fig. 4 ersichtlich wird, wobei Fig. 4 rein schematisch einen Schnitt durch die Vorrichtung 1 von Fig. 3 darstellt.

Das Gehäuse 5 weist eine elektronische Schaltung 6 auf, die einen eigenen Microprozessor und einen eigenen Speicher umfasst. Weiterhin umfasst das Gehäuse 5 einen Stecker 7 auf, der mit dem Mobiltelefon 4 verbunden ist, sodass einerseits eine bidirektionale Datenkommunikation zwischen dem Mobiltelefon 4 und der elektronischen Schaltung 6 erfolgen kann. Weiterhin weist das Gehäuse 5 einen Ladekontakt 8 auf, sodass ein im Mobiltelefon 4 vorgesehener Energiespeicher über den Ladekontakt 8 aufgeladen werden kann, wobei auch diese Energieversorgung über den Stecker 7 erfolgt.

Schließlich weist das Gehäuse 5 eine Tastatur bestehend aus lediglich zwei Tasten 9 auf, wobei eine Taste beispielsweise als Bestätigungstaste ausgestaltet sein kann, die entsprechend den vorbeschriebenen Ausführungsbeispielen funktioniert, und wobei die zweite Taste 9 beispielsweise als Alarmtaste dienen kann, die ihrerseits ein Alarmsignal auslöst, welches von der Vorrichtung 1 zu beispielsweise einer Alarmzentrale oder einem anderen voreingestellten Empfänger übermittelt wird.

Eine sichere Übermittlung der Nachricht, beispielsweise einer Alarmmeldung an die Vorrichtung 1, kann auf folgende Weise erfolgen:

Zunächst wird in an sich bekannter Weise eine Textnachricht als SMS-Mitteilung an das Mobiltelefon 4 verschickt. Die Informationen gelangen in einen Speicher des Mobiltelefons 4. Dieser Speicher kann im Telefon selbst oder in der SIM-Karte des Telefons 4 vorgesehen sein. Von diesem dem Telefon zugeordneten Speicher gelangt die Nachricht in den Speicher der elektronischen Schaltung 6. Der Microprozessor der elektronischen Schaltung 6 analysiert den Inhalt dieser Information und gibt gegebenenfalls, wenn er eine Alarminformation innerhalb der SMS-Nachricht entdeckt, ein Steuersignal an eine Klingel. Es kann sich dabei um eine im Gehäuse 5 vorgesehene Klingel handeln oder um die Klingel des Mobiltelefons 4. Dabei kann insbesondere vorgesehen sein, ein entweder akustisch besonders klingelndes Signal zu erzeugen, welches den Benutzer unmittelbar auf das Vorliegen einer Alarmmeldung hinweist oder es kann vorgesehen sein, über die im Normalbetrieb des Mobiltelefons 4 hinausgehende Zeitdauer ein Klingelsignal zu erzeugen, sodass die Aufmerksamkeit des Benutzers mit einer überdurchschnittlich hohen Wahrscheinlichkeit erregt werden kann. So kann beispielsweise vorgesehen sein, mehrere Minuten lang den Klingelton zu erzeugen oder sogar den Klingelton dauerhaft erfolgen zu lassen, bis entweder der Benutzer den Empfang der Mitteilung bestätigt, beispielsweise mittels einer Taste 9, oder bis der Energiespeicher des Mobiltelefons 4 bzw. ein eigener Energiespeicher im Gehäuse 5 erschöpft ist.

Beim Absender der Alarmmeldung ist vorgesehen, innerhalb einer vorgegebenen Zeitspanne ein Quittungssignal für den Empfang der SMS beim Empfänger zu erhalten. Es kann sich dabei um ein Quittungssignal handeln, welches der Netzbetreiber eines Funktelefonnetzes ausgibt und welches den Empfang der Meldung bei dem Empfangsgerät quittiert. Es kann sich bei dem auszuwertenden Quittungssignal jedoch auch um das bereits vorerwähnte Bestätigungssignal handeln, welches der Benutzer beim Lesen oder Nachlesen der Information auslösen soll.

In jedem Fall wird, wenn ein Quittungssignal nicht innerhalb der vorgegebenen Zeitspanne registriert wird, beim Absender der Alarmmeldung eine erneute Kommunikation mit dem Empfänger aufgebaut. Hierzu wird die Alarminformation nicht als SMS verschickt, sondern als Datensignal, wobei in diesem Fall das Mobiltelefon 4 lediglich als Modem dient und die Daten an die elektronische Schaltung 6 vermittelt. Auf diese Weise kann eine sichere Übertragung bzw. sichere Verbindung zwischen dem Absender der Alarminformation und dem Empfänger, nämlich der elektronischen Schaltung 6 aufgebaut werden, bei der ähnlich wie beim Faxbetrieb mittels eines "hand-shake" die Übertragung der Daten und der Empfang der Daten beim Empfangsgerät sichergestellt und quittiert wird.

Der Prozessor der elektronischen Schaltung 6 wertet diese Daten anschließend aus und setzt die Informationen in das SMS-Format um und überträgt diese Informationen dann an das Mobiltelefon 4, sodass nun der grundsätzlich selbe Funktionsablauf ablaufen kann, als wenn ursprünglich eine SMS-Nachricht an das Mobiltelefon 4 gesendet und von dem Mobiltelefon 4 empfangen wird. Die als SMS-Mitteilung umgesetzten Informationen können vom Microprozessor der elektronischen Schaltung 6 entweder an einen Speicher des Mobiltelefons selbst übermittelt werden oder an den auf der SIM-Karte des Mobiltelefons 4 befindlichen Speicher.

Die Informationen sind nun auf dem optischen Anzeigenfeld 2 des Mobiltelefons 4 genauso lesbar und mit denselben Funktionen abrufbar, bestätigbar und weiterbehandelbar wie originäre SMS-Mitteilungen, sodass die Handhabung der Vorrichtung 1 für den Benutzer in jedem Fall gleich ist unabhängig davon, ob die Daten als originäre SMS-Nachricht oder zunächst als Daten übertragen worden sind, die dann von der elektronischen Schaltung 6 in das SMS-Format umgesetzt worden sind.

Eine Alarmierung des Benutzers kann auch in diesem Fall, nach dem die Informationen von der elektronischen Schaltung 6 in das SMS-Format umgesetzt worden sind, entweder durch das Mobiltelefon 4 erfolgen oder unmittelbar durch die elektronische Schaltung 6 ausgelöst werden, welche entweder die Klingel des Telefons 4 oder eine im Gehäuse 5 eigens vorgesehene Klingel auslöst.

## Patentansprüche

1. Vorrichtung zum Versenden und Empfangen von alphanumerischen, drahtlos übertragbaren Nachrichten,
mit einer Tastatur,
und mit einem optischen Anzeigenfeld,
**gekennzeichnet durch**
eine elektronische Schaltung, die nach dem Empfang einer derartigen Nachricht bestimmte Funktionen der Vorrichtung sperrt oder aktiviert, indem
entweder
die elektronische Schaltung als Lese-Sperrschaltung ausgestaltet ist, welche während der Darstellung einer empfangenen Nachricht auf dem Anzeigenfeld andere Funktionen der Vorrichtung sperrt, während sie die Funktion einer Bestätigungsschaltung freigibt,
wobei die Bestätigungsschaltung nach der Eingabe des Bestätigungssignals das Aussenden einer Bestätigungsmeldung an den Absender der Nachricht auslöst,
oder
indem die elektronische Schaltung Empfang einer Alarminformation eine eigene Klingel oder die Klingel der Vorrichtung zu einem Dauersignal ansteuert,
oder
indem die elektronische Schaltung Informationen empfängt, welche die in einem Modembetrieb arbeitende Vorrichtung an die Schaltung übermittelt, wobei die elektronische Schaltung diese Informationen über eine Datenschnittstelle im Datenformat einer SMS-Textmeldung zur Darstellung auf dem optischen Anzeigenfeld ausgibt.

2. Vorrichtung nach Anspruch 1, **gekennzeichnet durch** einen Nachrichtenspeicher, wobei die Bestätigungsschaltung beim Entfernen der vom Anzeigenfeld zu entfernenden Nachricht wahlweise entweder ein Löschen der Nachricht oder ein Abspeichern der Nachricht in dem Nachrichtenspeicher auslöst.

3. Vorrichtung nach nach Anspruch 1 oder 2, **gekennzeichnet durch** einen als Adressbuch bezeichneten Speicher für Empfänger von Nachrichten, wobei dieser Speicher Namen und zugeordnete Anwahlnummern der Empfänger enthält.

4. Vorrichtung nach einem der vorhergehenden Ansprüche, **gekennzeichnet durch** einen Speicher für unterschiedliche Funktionsabläufe, wie die für die Datenübertragung zu nutzenden Kommunikationsnetze, oder Funktionsbelegungen der Tasten.

5. Vorrichtung nach einem der vorhergehenden Ansprüche,
**dadurch gekennzeichnet,**
**daß** die Vorrichtung ein Mikrophon aufweist,
und **daß** die Tastatur unter Vermeidung einer kompletten alphanumerischen Eingabetastatur auf wenige Tasten beschränkt ist,
wobei in der Vorrichtung
oder durch die Vorrichtung anwählbar bei einem
Betreiber eines Kommunikationsnetzes
eine maschinelle Spracherkennungsschaltung vorgesehen ist, welche eine mittels des Mikrophons eingegebene Mitteilung in alphanumerische Zeichen umsetzt.

6. Vorrichtung nach einem der vorhergehenden Ansprüche, **gekennzeichnet durch** einen Datenschnittstelle, die mit einem überschreibbaren Speicher für unterschiedliche Funktionsabläufe - wie die für die Datenübertragung zu nutzenden Kommunikationsnetze oder wie die Funktionsbelegungen der Tasten - wirksam verbunden ist.

7. Vorrichtung nach einem der vorhergehenden Ansprüche, **gekennzeichnet durch** eine Empfangs-Sperrschaltung, die bei Vorliegen einer empfangenen Nachricht sowohl eine Anzeige aktiviert, welche den Benutzer über das Vorliegen der neuen Nachricht informiert, als auch andere Funktionen der Vorrichtung sperrt, während sie die Funktion zum Anzeigen bzw. Auslesen der Nachricht freigibt.

8. Vorrichtung nach einem der vorhergehenden Ansprüche, **gekennzeichnet durch** ein Mikrophon, einen Lautsprecher, sowie **durch** eine Schaltung zum Aufbau einer Sprechverbindung.

9. Vorrichtung nach Anspruch 8, **dadurch gekennzeichnet, dass** die Schaltung die Sprechverbindung zu einer Anwahlnummer aufbaut, welche in der alphanumerischen Nachricht enthalten ist.

10. Vorrichtung nach einem der vorhergehenden Ansprüche, **dadurch gekennzeichnet, dass** die Vorrichtung als Mobiltelefon ausgestaltet ist, wobei die elektrische Schaltung in einem separaten, mit dem Mobiltelefon verbindbaren Gehäuse angeordnet ist,

11. Vorrichtung nach Anspruch 10, **dadurch gekennzeichnet, dass** das Gehäuse als Halterung ausgestaltet ist, welche das Mobiltelefon aufnimmt.

12. Vorrichtung nach Anspruch 10 oder 11, **dadurch gekennzeichnet, dass** die elektrische Schaltung einen Speicher aufweist, wobei zwischen Mobiltelefon und der elektrischen Schaltung eine bidirektionale Datenkommunikation erfolgt und Informationen im Speicher speicherbar und von der elektrischen Schaltung analysierbar sind.

13. Vorrichtung nach Anspruch 12, **dadurch gekennzeichnet, dass** das Mobiltelefon durch die elektrische Schaltung vom Informationsgehalt abhängig gesteuert wird.
